# EUROPÄISCHE PATENTSCHRIFT

(11) **EP 2 799 793 B1**
(45) Veröffentlichungstag und Bekanntmachung des Hinweises auf die Patenterteilung: **20.09.2017**
(21) Anmeldenummer: 14161082.4
(22) Anmeldetag: 21.03.2014
(51) Int. Cl.: F24H 3/06, B27D 5/00, H05B 3/44

(54) **Werkstückbeschichtungsmaschine mit Heißgaserzeugungseinrichtung**
Workpiece coating machine with hot gas generating device
Machine de revêtement pour pièces à usiner avec dispositif de production de gaz chaud

(30) Priorität: 03.05.2013 DE 102013208127
(43) Veröffentlichungstag der Anmeldung: 05.11.2014
(73) Patentinhaber: HOMAG GmbH, 72296 Schopfloch (DE)
(72) Erfinder: Götz, Reiner, 72160 Horb-Diessen (DE); Schmid, Johannes, 72181 Starzach (DE)
(74) Vertreter: Hoffmann Eitle

(56) Entgegenhaltungen:
- DE-A1- 10 234 043
- DE-A1-102011 015 898
- DE-B1- 2 850 111
- GB-A- 1 133 992
- US-A- 2 491 849
- US-A- 2 775 683
- US-A- 5 441 710
- US-A1- 2007 145 038

## Beschreibung

### Technisches Gebiet

Die vorliegende Erfindung betrifft eine Werkstückbeschichtungsmaschine mit einer Heißgaserzeugungseinrichtung, mit der ein Gasstrom, beispielsweise ein Luftstrom, erwärmt wird. Dieser wird bevorzugt dazu genutzt, ein Kantenband oder ein anderes Beschichtungsmaterial zu erwärmen, insbesondere eine an diesem Beschichtungsmaterial vorgesehene Haftmittelschicht. Auf diese Weise wird das Beschichtungsmaterial zur Aufbringung auf einem beispielsweise plattenförmigen (Holz-)Werkstück vorbereitet. Die Werkstückbeschichtungsmaschine betrifft sowohl Maschinen aus dem Bereich der CNC- bzw. Stationärtechnik, bei der ein Werkstück während des Auftrags der Beschichtung fixiert gehalten ist, als auch Maschinen aus dem Bereich der Durchlauftechnik (bewegtes Werkstück).

### Stand der Technik

Als Stand der Technik ist die DE 10 2011 015 898 A1 bekannt. Dieses Dokument offenbart eine Werkstückbeschichtungsmaschine gemäß dem Obergriff des Anspruchs 1 und betrifft eine Kantenbeschichtungsvorrichtung zum Aufbringen eines bandförmigen mehrschichtigen Kantenstreifens auf Schmalflächen eines Werkstücks, wobei der Kantenstreifen kleberfrei aktivierbar auf den Schmalflächen befestigbar ist. Die Kantenbeschichtungsvorrichtung umfasst mindestens eine Zufuhreinrichtung für die Kantenstreifen und eine Anpresseinrichtung, die den wärmeaktivierten Kantenstreifen an die Schmalfläche des Werkstücks andrückt. Im Bereich der Zufuhreinrichtung und/oder Anpresseinrichtung ist ein Auslass für Heißluft oder Heißgas angeordnet, der die Heißluft oder das Heißgas unter Druck auf den Kantenstreifen und/oder die wärmeaktivierbare Schicht des Kantenstreifes aufgibt.

Mit dem Auslass steht eine Erwärmungseinrichtung fluidmäßig in Verbindung, die die Heißluft oder das Heißgas auf die benötigte Aktivierungstemperatur für die wärmeaktivierbare Schicht des Kantenstreifens bringt. In der Erwärmungseinrichtung sind Wärmetauscherelemente vorgesehen, z.B. parallele Rohrbündel oder Sintermaterial mit darin eingelagertem Heizelement, z.B. elektrischem oder gasbetriebenem Heizelement.

Wird jedoch die Variante mit dem Sintermaterial verwendet, kommt es zwischen dem Eingang des Wärmetauschers und dem Ausgang zu einem relativ hohen Druckverlust, weshalb das System mit einem hohen Volumenstrom und hohem Druck betrieben werden muss. Dies wiederum führt zu einer schlechten Reaktion auf die Temperaturregelung und die Steuerung. Außerdem muss die Erwärmungseinrichtung relativ groß ausgeführt werden.

Als weiteres Dokument ist die US 2007/0145038 A1 bekannt, die einen Gaserwärmer mit einer inneren spiralförmigen Spule und einer äußeren spiralförmigen Spule zeigt. Die innere und äußere spiralförmige Spule sind koaxial ausgerichtet und konzentrisch angeordnet, um einen im Wesentlichen hindernisfreien Raum für den Durchgang des Gases durch das Gehäuse von einer Einlassmündung zu einer Auslassmündung zu definieren.

Die DE 102 34 043 A1 betrifft einen Mikrostrukturapparat zum Erhitzen eines Fluids, umfassend ein Innenrohr oder einen Körper mit einer Außenfläche und einer Heizung, ein konzentrisch um dieses angeordnetes Außenrohr mit einer Innenfläche, Anschlüsse für das Fluid, sowie einer Mikrostruktur, welche ein Volumen zwischen Innen- und Außenrohr unter Bildung mindestens eines Kanals vollständig und zu dem Innen- und Außenrohr dichtend ausfüllt. Aufgabe ist es, einen Mikrostrukturapparat zur Erhitzung von Fluiden vorzuschlagen, welcher sich durch einfach aufgebaute Heizelemente auszeichnet.

### Gegenstand der Erfindung

Ziel der vorliegenden Erfindung ist es, eine Werkstückbeschichtungsmaschine mit einer Heißgaserzeugungseinrichtung bereitzustellen, mit der die zuvor genannten Probleme behoben werden können. Ferner soll bei einer solchen Heißgaserzeugungseinrichtung der Eingangsdruck relativ gering gehalten werden, und dennoch eine geforderte Aktivierung eines Beschichtungsmaterials möglich sein.

Der Gegenstand des unabhängigen Anspruchs 1 stellt eine Lösung für die zuvor genannten Ziele bereit. Weitere bevorzugte Ausführungsformen sind in den abhängigen Ansprüchen aufgeführt.

Kerngedanke der vorliegenden Erfindung ist es dabei, das Gas derart in der Heißgaserzeugungseinrichtung zu führen, dass ein geringer Druckverlust in Kauf genommen werden muss..

"Gas" bedeutet im Sinne der vorliegenden Erfindung jegliches gasförmige Medium, beispielsweise Luft.

Eine Heißgaserzeugungseinrichtung kann unmittelbar vor der jeweiligen Heißgasdüse, die beispielsweise als Umlenkeinrichtung ausgeführt ist, angeordnet werden, sodass sich sehr geringe Verluste ergeben, oder kann in diese integriert sein. Darüber hinaus kann mit sehr kurzen Aufheizzeiten gerechnet werden. Somit kann die Heißgaserzeugungseinrichtung auch je nach Bedarf zugeschaltet werden.

Die Erwärmung des Gases erfolgt derart, dass eine Temperatur von ca. 300-400°C beim Austritt aus der Heißgaserzeugungseinrichtung erreicht wird. Auf diese Weise wird eine sichere Aktivierung eines Beschichtungsmaterials, beispielsweise eines Kantenbandes, zur Anhaftung an einem Werkstück erreicht.

Erfindungsgemäß ist es vorgesehen, dass der Gasführungspfad im Gehäuse um eine Achse verläuft. Diese Ausgestaltung des Gasführungspfades erlaubt es, die Heißgaserzeugungseinrichtung äußerst kompakt auszugestalten, da der Gasführungspfad auch die Breite des Gehäuses ausnutzt. Wie nachfolgend erläutert, handelt es sich beim Verlauf des Gasführungspfades um eine Achse beispielsweise um eine wendelförmige, spiralförmige, helixförmige oder andersartige, um die Achse gewundene Führung.

Hierbei ist es bevorzugt, dass die Energiequelle innerhalb des Gehäuses aufgenommen ist, und somit mit dem Gasführungspfad eine kompakte Einheit bildet. Alternativ könnte die Energiequelle auch am Gehäuse angebracht sein, und auf diesem Weg auf das im Gasführungspfad geführte Gas einwirken.

Der Gasführungspfad ist in diesem Zusammenhang bevorzugt wendelförmig im Gehäuse geführt, beispielsweise als feines Gewinde mit einer sehr flachen Steigung, sodass sich eine große Gasführungspfadlänge, im konkreten Beispiel also eine große Gewindelänge, ergibt. Demnach kann das durch die Heißgaserzeugungseinrichtung geführte Medium trotz der kompakten Ausführung der Heißgaserzeugungseinrichtung auf einer vergleichsweise langen Strecke aufgeheizt werden.

Alternativ kann der Gasführungspfad auch spiralförmig oder helixförmig um die Achse verlaufen, insbesondere mit gleicher oder sich verändernder Steigung.

Da das Gas im Gasführungspfad erwärmt wird, und sich somit entlang der Strömungsrichtung ausdehnt, ist es erfindumgsgemäß so, dass der Querschnitt des Gasführungspfades entlang der Strömungsrichtung zunimmt. Auf diese Weise kann die Strömungsgeschwindigkeit des geförderten Gases im Wesentlichen konstant gehalten werden. Gemäß der Erfindung kann der Querschnitt des Gasführungspfades jedoch auch konstant gehalten werden.

Bevorzugt ist im Gehäuse ein Rotationskörper aufgenommen, an dessen Außenseite der Gasführungspfad verläuft und der Rotationskörper bevorzugt in einem Isolierrohr aufgenommen ist. Ein derartiger Aufbau ist besonders kostengünstig herzustellen. Hierbei ist die genannte Achse bevorzugt die Längsachse des Rotationskörpers.

Alternativ ist im Gehäuse ein Rotationskörper aufgenommen, wobei der Gasführungspfad innerhalb des Rotationskörpers geführt ist. Demnach wird ein kompaktes Bauteil mit wenigen Einzelelementen bereitgestellt. Auch in diesem Fall kann die genannte Achse eine Längsachse des Rotationskörpers sein.

In einer bevorzugten Ausführungsform ist die Energiequelle im Rotationskörper aufgenommen. Alternativ kann es auch vorgesehen sein, dass der Rotationskörper selbst erwärmt wird.

Insbesondere ist die Energiequelle gemäß einer Ausführungsform eine Widerstandsheizpatrone. Diese lässt sich besonders leicht in das Gehäuse, oder gemäß einer der oben Varianten auch in den Rotationskörper, integrieren.

Gemäß einer weiteren Variante der vorliegenden Erfindung können mehrere Gehäuse parallel oder hintereinander geschaltet sein. Somit ist es möglich, entweder mehrere parallele Gasführungspfade bereitzustellen, oder das in einem Gasführungspfad geführte Medium bei einer Reihenschaltung mehrerer Gehäuse stärker aufzuheizen.

Ferner wird bevorzugt in Strömungsrichtung nach dem Gehäuse eine Umlenkeinrichtung mit zumindest einer Austrittsöffnung vorgesehen. Diese ist dazu vorgesehen, den im Gasführungspfad geführten Gasstrom beispielsweise auf ein Kantenband zu leiten. Auf diese Weise wird das Kantenband selbst, oder eine an diesem vorgesehene Haftmittelschicht in einen aktivierten Zustand versetzt, so dass das Kantenband an einer Schmalseite eines Werkstücks angehaftet werden kann.

Dabei ist es zwar bevorzugt vorgesehen, dass das erwärmte Gas vom Gehäuse zur zumindest einen Austrittsöffnung geleitet wird, und die Strömungsrichtung auf diesem Weg eine Umlenkung erfährt.

Alternativ kann das Gehäuse jedoch derart in die Umlenkeinrichtung integriert werden, dass das erwärmte Gas beim Austritt aus dem Gehäuse unmittelbar auch aus der Austrittsöffnung der Umlenkeinrichtung austritt, oder dass das Gehäuse direkt benachbart zur Umlenkeinrichtung angeordnet ist.

Auch kann die Strömungsrichtung des erwärmten Gases nach Austritt aus dem Gehäuse geradlinig zu der zumindest einen Umlenkeinrichtung geführt werden und auch geradlinig aus dieser austreten.

Grundsätzlich ist es jedoch auch möglich, mit einer weiteren Ausgestaltung der vorliegenden Erfindung eine Beschichtung der Breitseite eines Werkstücks vorzusehen.

Die Austrittsöffnung kann eine Vielzahl von Geometrien aufweisen, beispielsweise rund, quadratisch, schlitzförmig, in Gestalt einer Freiform oder - bei mehreren Austrittsöffnungen - unterschiedliche Querschnitte. Ferner können mehrere Öffnungen in einer Reihe angeordnet sein, oder die Austrittsöffnung ist als Schlitz ausgebildet, um auf diese Weise eine "Reihe" auszubilden.

Ferner ist es möglich, mehrere solcher Reihen nebeneinander anzuordnen, wobei jede Reihe individuell ausgestaltet ist, und diese Reihen ggf. einzeln oder alle gemeinsam mit einem Gasstrom vom Gehäuse zu versorgen.

Bevorzugt ist die Umlenkeinrichtung mit einer ersten Absaugeinrichtung versehen, die benachbart zu den Austrittsöffnungen vorgesehen ist und im Wesentlichen in die gleiche Richtung weist. Das von der Absaugeinrichtung abgesaugte Gas lässt sich zum Gehäuse zurückführen, und kann wiederum zum Erwärmen des neu zugeführten Gases verwendet werden. Auf diese Weise lässt sich die Energieeffizenz der Heißgaserzeugungseinrichtung weiter steigern, wobei die genannte Anordnung eine kompakte Bauweise erlaubt.

Alternativ oder zusätzlich ist gegenüber der Umlenkeinrichtung eine zweite Absaugeinrichtung vorgesehen. Diese kann auch Teil der Umlenkeinrichtung selbst sein. Somit wird insbesondere in dem Fall, in dem kein Kantenband entlang der Umlenkeinrichtung gefördert wird, das durch die Austrittsöffnung(en) ausgestoßende Gas abgesaugt, um den Wärmeenergieverlust möglichst gering zu halten.

### Kurze Beschreibung der Zeichnungen

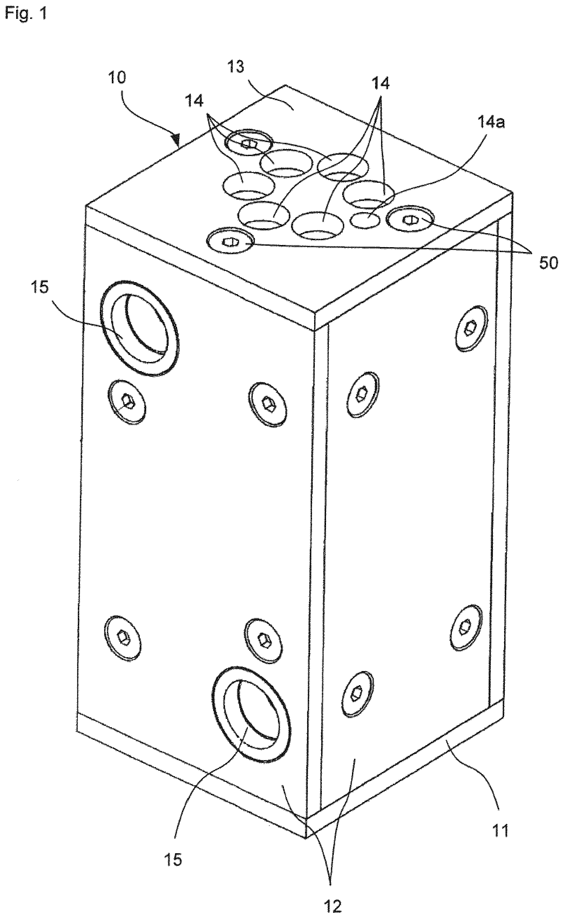

- Fig. 1: ist eine perspektivische Ansicht einer Heißgaserzeugungseinrichtung gemäß einer ersten Ausführungsform der vorliegenden Erfindung.

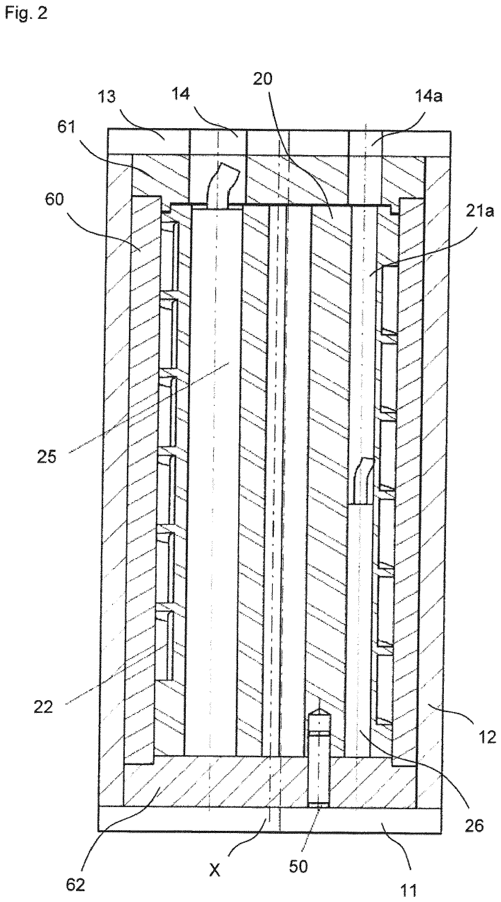

- Fig. 2: ist eine Schnittansicht der in Fig. 1 dargestellten Ausführungsform.

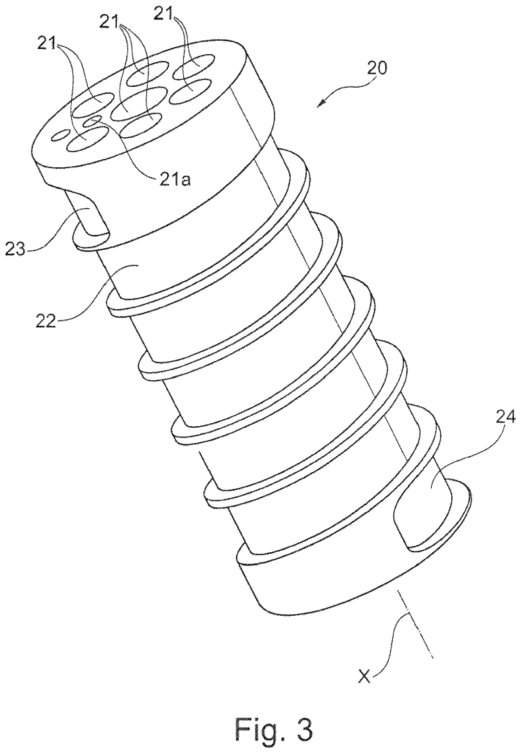

- Fig. 3: zeigt einen in der in Fig. 1 dargestellten Ausführungsform aufgenommenen Rotationskörper.
- Fig. 4: ist eine schematische Darstellung der Heißgaserzeugungseinrichtung zur Aufbringung des Heißgases auf ein Beschichtungsmaterial.
- Fig. 5: zeigt mehrere Varianten im Bereich einer Umlenkeinrichtung der Heißgaserzeugungseinrichtung
- Fig. 6: zeigt eine mehrreihige Anordnung im Bereich der Umlenkeinrichtung
- Fig. 7: zeigt eine kombinierte mehrreihige Anordnung im Bereich der Umlenkeinrichtung
- Fig. 8: veranschaulicht das Prinzip der Einfacheinspeisung in eine mehrreihige Umlenkeinrichtung
- Fig. 9: erläutert das Prinzip der Mehrfacheinspeisung in eine mehrreihige Umlenkeinrichtung
- Fig. 10a: veranschaulicht eine in Kombination mit der Heißgaserzeugungseinrichtung vorgesehene Luftrückführeinrichtung
- Fig. 10b: zeigt Austrittsöffnungen mit verschiedenen Austrittswinkeln
- Fig. 11: zeigt eine weitere Ausführungsform einer Heißgaserzeugungseinrichtung
- Fig. 12: ist eine perspektivische Ansicht der in Fig. 11 gezeigten Heißgaserzeugungseinrichtung

### Detaillierte Beschreibung der bevorzugten Ausführungsformen

Nachfolgend werden anhand der beigefügten Figuren bevorzugte Ausführungsformen der vorliegenden Erfindung beschrieben. Weitere in diesem Zusammenhang genannte Modifikationen einzelner Merkmale können jeweils miteinander kombiniert werden, um neue bevorzugte Ausführungsformen der vorliegenden Erfindung im Rahmen des Schutzbereichs gemäß der Ansprüche auszubilden.

Eine erste Ausführungsform der vorliegenden Erfindung betrifft eine Heißgaserzeugungseinrichtung 1, die ein Gehäuse 10 umfasst. Das Gehäuse 10 ist in der vorliegenden Ausführungsform mehrteilig ausgebildet, und umfasst einen Unterteilabschnitt 11, mehrere Seitenwände 12 sowie einen Deckelabschnitt 13. Im Bereich des Deckelabschnitts 13 sind mehrere Öffnungen 14, 14a vorgesehen, und eine oder mehrere Seitenwände umfassen eine Eingangs- sowie eine Ausgangsöffnung 15.

Im Inneren des Gehäuses 10 ist ein Rotationskörper 20 aufgenommen, der mittels durch den Unterteilabschnitt 11 und dem Deckelabschnitt 13 geführten Schrauben 50 fixiert ist. Ferner umfasst der Rotationskörper 20 mehrere Durchgangsöffnungen 21, die bei Anordnung des Rotationskörpers 20 im Gehäuse 10 komplementär zu den Öffnungen 14 im Deckelabschnitt 13 angeordnet sind. An der Außenumfangsfläche des Rotationskörpers 20 ist ein Luftführungspfad 22 spiralförmig angeordnet, und erstreckt sich von einem Einlassabschnitt 23 an einer Seite des Rotationskörpers 20 zu einem Auslassabschnitt 24 an der gegenüberliegenden Seite des Rotationskörpers 20.

In der vorliegenden Ausführungsform sind in die Durchgangsöffnungen 21 Widerstandsheizpatronen 25 eingeführt. Alternativ ist es möglich, lediglich eine Widerstandsheizpatrone 25 in den Rotationskörper 20 einzuführen oder den Rotationskörper 20 direkt zu erwärmen.

Ferner ist im Rotationskörper 20 ein Temperaturfühler 26 aufgenommen, der zur Regelung der Ansteuerung der Widerstandsheizpatrone(n) 25 verwendet wird. Der Temperaturfühler wird durch die Öffnung 14a in die Ausnehmung 21a des Rotationskörpers 20 eingeführt.

Innerhalb des Gehäuses 10 ist gemäß der vorliegenden Ausführungsform ein Isolierrohr 60 aufgenommen, das sich im Wesentlichen über die Länge des Rotationskörpers 20 erstreckt und somit den Luftführungspfad 22 in einer radialen Richtung nach Außen abdichtet. Ferner ist an einer Innenseite des Deckelabschnitts 13 ein Isolierdeckel 61, und an einer Innenseite des Unterteilabschnitts 11 ein Unterteilisolierdeckel 62 vorgesehen.

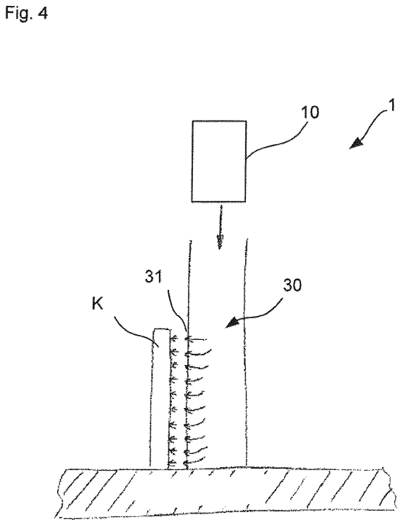

In Strömungsrichtung der in das Gehäuse 10 eingeführten Druckluft ist nachfolgend eine Umlenkeinrichtung 30 vorgesehen. Diese Umlenkeinrichtung 30 verwendet die über die Heißluft zugeführte Energie, und leitet diese in Richtung eines Kantenbandes K weiter. Die Heißluft bzw. das Heißgas tritt auf diesem Wege aus der Umlenkeinrichtung 30 aus, und führt die über das Trägermedium bereitgestellte Energie zur Aktivierung des Kantenbandes K bereit. Dabei umfasst die Umlenkeinrichtung 30 eine oder mehrere Austrittsöffungen 31. In Fig. 4 ist hierbei in einer Seitenansicht eine Reihe mehrerer Austrittsöffnungen 31 dargestellt.

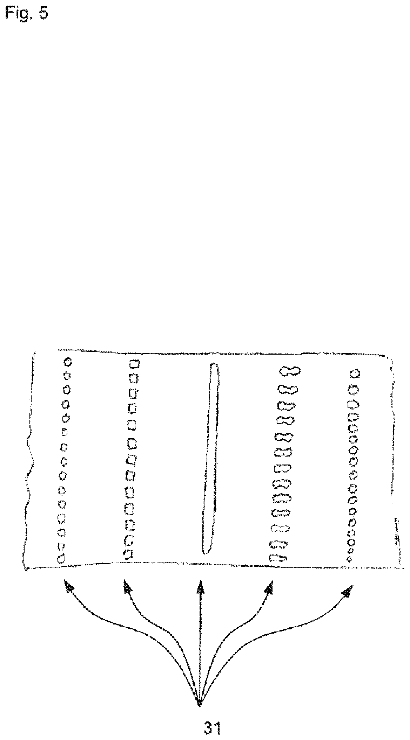

Die Ausgestaltung der zumindest einen Austrittsöffnung kann hierbei vielseitig sein. Insbesondere können in Reihe angeordnete Lochgeometrien bereitgestellt werden, wobei die Austrittsöffnungen in diesem Fall eine runde Lochgeometrie, eine eckige Lochgeometrie, eine Freiformgeometrie oder eine längs zur Fluidrichtung geformte Oberfläche der Austrittsöffnungen (Spirale) ausgebildete Geometrie aufweisen. Ferner kann es auch vorgesehen sein, eine durchgehende Öffnung insbesondere in Form eines Schlitzes bereitzustellen (siehe Fig.5).

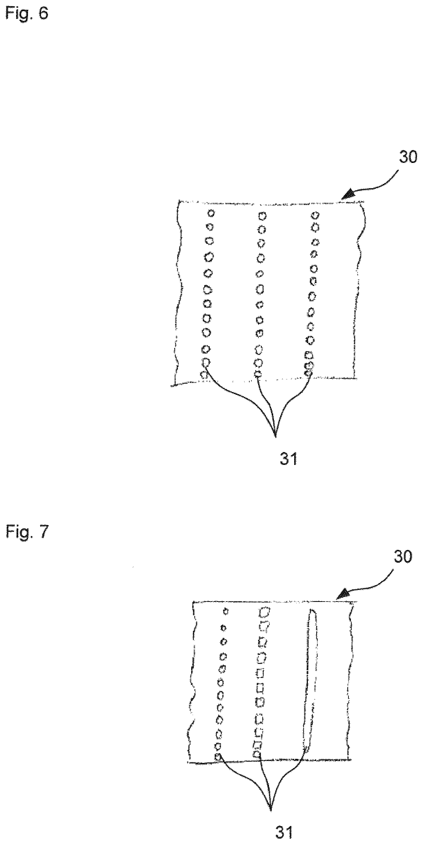

Gemäß einer bevorzugten Ausführungsform der vorliegenden Erfindung ist eine mehrreihige Anordnung der zumindest einen Austrittsöffnung 31 vorgesehen, wobei die Austrittsöffnungen in mehreren Reihen gleichartig ausgebildet sein können, oder eine oder mehrere Austrittsöffnungen mit unterschiedlichen Geometrien aufweisen können (siehe Figuren 6-7).

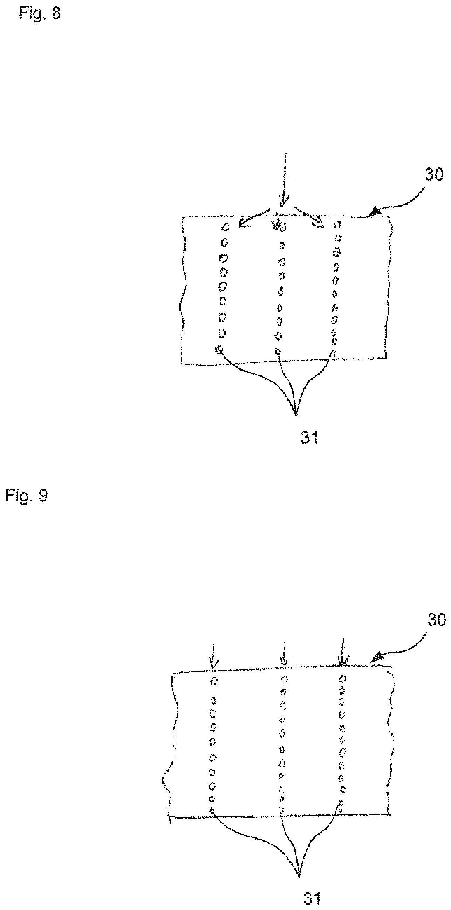

Entsprechend der zugeführten Höhe des Kantenbandes K wird die Austrittshöhe der Energie begrenzt. Ferner können die Austrittsöffnungen 31 in der Durchlaufrichtung entweder nur einreihig oder mehrreihig angeordnet sein, je nach Anforderung der Leistungsstufen der Bearbeitungsmaschine. In Kombination mit der bzw. den Energiequellen können unterschiedliche Aufbauten gewählt werden, insbesondere eine Energiequelle für eine Austrittsöffnung, mehrere Energiequellen pro Reihe der Austrittsöffnungen oder eine Kombination hiervon. Durch diesen Aufbau ist eine Ansteuerung in zeitlich unterschiedlicher Abfolge möglich, sodass das Kantenband entsprechend der Durchlaufbewegung aktiviert werden kann (siehe Figuren 8-9).

Um die Energieeffizienz der Heißgaserzeugungseinrichtung 1 weiter zu steigern, kann diese mit einer Luftrückführung kombiniert werden. Dabei kann es vorgesehen sein, dass die austretende heiße Luft über eine erste Absaugeinrichtung 41 an der Umlenkeinrichtung 30 aufgefangen und zurückgeleitet wird. Neben einer Anordnung, bei der die austretende Luft direkt an der Umlenkeinrichtung 30 wieder aufgenommen wird, kann es vorgesehen sein, eine zweite Absaugeinrichtung 42 gegenüber der Umlenkeinrichtung vorzusehen. Die erste bzw. zweite Absaugeinrichtung 41/42 kann jeweils einzeln, oder in Kombination mit der jeweils anderen Absaugeinrichtung zum Einsatz kommen.

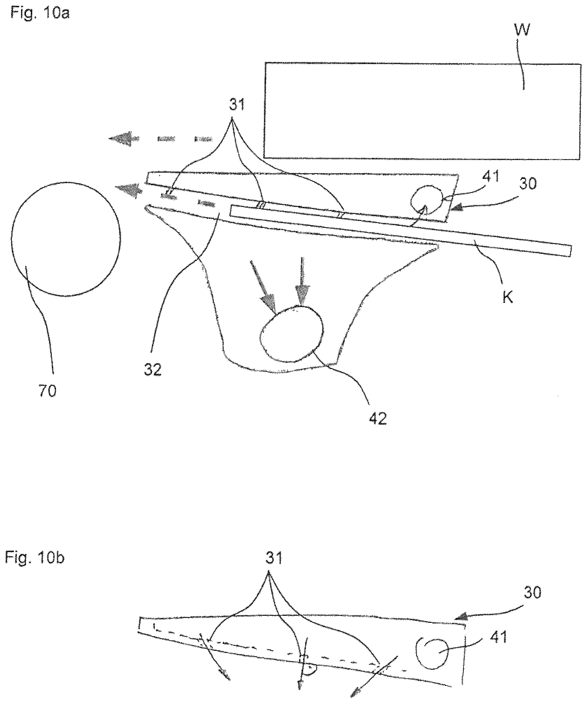

Aus der Draufsicht gemäß Fig. 10a ergibt sich auch anschaulich, wie ein Kantenband K auf eine Schmalseite eines Werkstücks W aufgebracht wird. Hierbei wird das Kantenband K in einem Führungsspalt 32 gefördert, der neben oder in der Umlenkeinrichtung 30 ausgebildet ist. Die Reihen der Austrittsöffnungen 31 verlaufen hierbei senkrecht zur in Fig. 10 abgebildeten Ebene. Wie bereits erläutert, kann je nach Bedarf eine oder mehrere der Reihen von Austrittsöffnungen 31 heiße Luft ausstoßen, die das Kantenband K bzw. eine darauf aufgebrachte Haftschicht erwärmt und somit zur Aufbringung am Werkstück W vorbereitet.

Das Werkstück W und das Kantenband K werden in Abstimmung miteinander gefördert, und gelangen im Bereich einer Andruckrolle 70 in Kontakt miteinander. Die Andruckrolle 70 drückt dabei das zur Anbringung am Werkstück W vorbereitete Kantenband K an diesem an.

Anstelle der Andruckrolle 70 können auch mehrere Andruckrollen oder eine andere Andruckeinrichtung vorgesehen sein, um das Kantenband K an das Werkstück W anzudrücken.

In Fig. 10a wird ein Abschnitt einer Maschine aus dem Bereich der Durchlauftechnik gezeigt, bei der das Werkstück W relativ zur Andruckrolle bewegt wird. Alternativ ist es jedoch auch möglich, die Andruckrolle, die Umlenkeinrichtung und ggf. das Gehäuse beweglich vorzusehen und das Werkstück während der Bearbeitung zu fixieren.

Fig. 10b zeigt eine Detailansicht von Fig. 10a. Die darstellte Umlenkeinrichtung umfasst hierbei unterschiedlich ausgerichtete Austrittsöffnungen 31, wobei eine der Austrittsöffnungen im Wesentlichen senkrecht in den Führungsspalt 32 mündet, eine weitere Austrittsöffnung in Förderrichtung des Kantenbandes geneigt ist und sich die dritte Austrittsöffnung entgegen der Förderrichtung des Kantenbandes in den Führungsspalt öffnet.

Die in Fig. 10b dargestellte Kombination unterschiedlich ausgerichteter Austrittsöffnungen 31 ist lediglich beispielhaft. Bevorzugt ist es vorgesehen, dass die eine oder ggf. mehreren Austrittsöffnungen im Wesentlich senkrecht in den Führungsspalt 32 münden.

Alternativ kann die eine oder ggf. mehreren Austrittsöffnungen in oder entgegen der Förderrichtung des Kantenbandes geneigt sein.

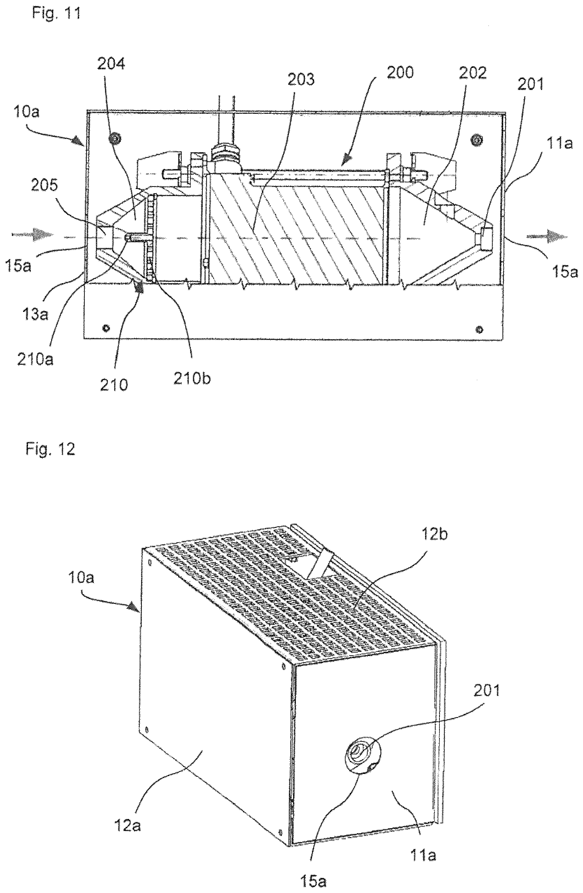

In den Figuren 11 und 12 wird eine weitere Ausführungsform dargestellt. Diese umfasst ein Gehäuse 10a, das wie das Gehäuse 10 in der ersten Ausführungsform mehrteilig ausgebildet ist. Demnach umfasst das Gehäuse 10a einen Unterteilabschnitt 11a, mehrere Seitenwände 12a sowie einen Deckelabschnitt 13a. Im Bereich des Unterteilabschnitts 11a ist eine Eingangs- bzw. Ausgangsöffnung 15a vorgesehen.

Ferner ist im Bereich des Deckelabschnitts 13a ebenso eine Eingangs- bzw. Ausgangsöffnung 15a vorbereitet.

Bezüglich der Seitenwände 12a des Gehäuses 10a ist anzumerken, dass eine dieser als durchlässige Abdeckung 12b ausgebildet ist, sodass die innerhalb des Gehäuses 10a vorgesehenen Elemente von außen begutachtet werden können, ohne das Gehäuse 10a zu öffnen.

Innerhalb des Gehäuses 10a ist eine Erwärmungseinrichtung 200 vorgesehen, die eine erste Öffnung 201 sowie eine zweite Öffnung 205 aufweist, welche Öffnungen 201, 205 mit der jeweiligen Eingangs- bzw. Ausgangsöffnung 15a fluchtend angeordnet sind.

Benachbart zu den Öffnungen 201, 205 sind in der Erwärmungseinriahtung 200 kegelförmige Abschnitte 202, 204 angeordnet.

Strömt die Luft in Fig. 11 von der linken Seite durch die erste Öffnung 205 in die Erwärmungseinrichtung 200, so wird die Strömungsgeschwindigkeit der Luft im Bereich des ersten kegelförmigen Abschnitts 204 verlangsamt und die Luft verteilt. Hierzu ist im Bereich des kegelförmigen Abschnitts 204 oder in Strömungsrichtung anschließend hierzu eine Verteileinheit 210 vorgesehen. Diese umfasst einen zur Öffnung 205 hervorstehenden Prallabschnitt 210a sowie ein Trennelement 210b mit mehreren Öffnungen, beispielsweise ein Lochblech.

Nachfolgend gelangt die Luft im Bereich eines Erwärmungsabschnitts 203, der mit keramischen Heizelementen versehen ist. Auf diesem Weg wird die durch die Erwärmungseinrichtung 200 geführte Luft im Erwärmungsabschnitt 203 erwärmt. Anschließend wird die Strömungsgeschwindigkeit der erwärmten Luft im Bereich des zweiten Kegelabschnitts 202 erhöht, und die erwärmte Luft tritt im Bereich der zweiten Öffnung 201 aus der Erwärmungseinrichtung 200, und demnach auch aus dem Gehäuse 10a aus.

Die in den Figuren 11 und 12 dargestellte Variante wird mit erhöhtem Luftdruck betrieben, insbesondere im Bereich > 1 bar. Auch dieses System hat einen sehr geringen Druckverlust im Bereich des Gehäuses 10a, und kann deshalb mit einem relativ geringen Eingangsdruck betrieben werden, wobei gleichzeitig die für die Umlenkeinrichtung geforderte Strömungsgeschwindigkeit bereitgestellt werden kann.

Insbesondere kennzeichnet sich die in den Figuren 11 und 12 dargestellte Variante einer Heißgaserzeugungseinrichtung durch folgende Merkmale: Erwärmungseinrichtung 200 mit einer ersten Öffnung 205 und einem benachbart hierzu angeordneten Kegelabschnitt 204 zum Reduzieren der Strömungsgeschwindigkeit. In Strömungsrichtung des geführten Gases ist ein Erwärmungsabschnitt 203 mit keramischen Heizelementen vorgesehen, sowie nachfolgend ein kegelförmiger Abschnitt sowie eine zweite Öffnung 201. Insbesondere wird die Erwärmungseinrichtung 200 mit einem Gas mit einem Druck von >1 bar versorgt. Ferner kann im Bereich des kegelförmigen Abschnitts 204 oder in Strömungsrichtung anschließend hierzu eine Verteileinheit 210 vorgesehen. Diese umfasst bevorzugt einen zur Öffnung 205 hervorstehenden Prallabschnitt 210a sowie ein Trennelement 210b mit mehreren Öffnungen, beispielsweise ein Lochblech.

Es ist möglich, die Heißgaserzeugungseinrichtung gemäß Figuren 11 und 12 mit Merkmalen zu versehen, die in Zusammenhang mit der ersten Ausführungsform genannt sind. Ferner kann die Heißgaserzeugungseinrichtung gemäß Figuren 11 und 12 mit einer zuvor beschriebenen Umlenkeinrichtung 30 versehen sein.

Mehrere in den Figuren 11 und 12 gezeigte Heißgaserzeugungseinrichtungen können in Reihe oder parallel angeordnet werden, um das erwärmte Gas einer Umlenkeinrichtung zuzuführen. Ferner ist es möglich, die Heißgaserzeugungseinrichtungen gemäß den beschriebenen Ausführungsformen in Reihe oder parallel zu kombinieren.

## Patentansprüche

1. Werkstückbeschichtungsmaschine, insbesondere eine Kantenanleimmaschine, mit einer Heißgaserzeugungseinrichtung (1) zum Erzeugen und Bereitstellen von Heißgas, insbesondere Heißluft, für die Werkstückbeschichtungsmaschine, insbesondere die Kantenanleimmaschine, wobei die Heißgaserzeugungseinrichtung (1) aufweist:
Ein Gehäuse (10), einen im Gehäuse geführten Gasführungspfad (22) sowie eine Energiequelle (25) zur Erwärmung eines im Gasführungspfad (22) geführten Gases, **dadurch gekennzeichnet, dass** der Gasführungspfad (22) im Gehäuse (10) um eine Achse (X) verläuft und der Querschnitt des Gasführungspfades entlang der Strömungsrichtung konstant bleibt oder zunimmt.

2. Werkstückbeschichtungsmaschine gemäß Anspruch 1, **dadurch gekennzeichnet, dass** die Energiequelle (25) innerhalb des Gehäuses aufgenommen ist.

3. Werkstückbeschichtungsmaschine gemäß Anspruch 1 oder 2, **dadurch gekennzeichnet, dass** der Gasführungspfad (22) im Gehäuse (10) wendelförmig, spiralförmig oder helixförmig um die Achse (X) verläuft, insbesondere mit gleicher oder sich verändernder Steigung.

4. Werkstückbeschichtungsmaschine gemäß einem der Ansprüche 1-3, **dadurch gekennzeichnet, dass** im Gehäuse (10) ein Rotationskörper (20) aufgenommen ist, an dessen Außenseite der Gasführungspfad (22) verläuft und der Rotationskörper (20) bevorzugt in einem Isolierrohr (60) aufgenommen ist.

5. Werkstückbeschichtungsmaschine gemäß einem der Ansprüche 1-3, **dadurch gekennzeichnet, dass** im Gehäuse (10) ein Rotationskörper (20) aufgenommen ist, wobei der Gasführungspfad (22) innerhalb des Rotationskörpers (20) geführt ist.

6. Werkstückbeschichtungsmaschine gemäß Anspruch 4 oder 5, **dadurch gekennzeichnet, dass** die Energiequelle (25) im Rotationskörper (20) aufgenommen ist.

7. Werkstückbeschichtungsmaschine gemäß einem der vorangegangenen Ansprüche, **dadurch gekennzeichnet, dass** die Energiequelle (25) eine Widerstandsheizpatrone, ein IR-Strahler oder eine induktive Energiequelle ist.

8. Werkstückbeschichtungsmaschine gemäß einem der vorangegangenen Ansprüche, **dadurch gekennzeichnet, dass** mehrere Gehäuse (10) parallel oder hintereinander geschaltet sind.

9. Werkstückbeschichtungsmaschine gemäß einem der vorangegangenen Ansprüche, **dadurch gekennzeichnet, dass** in Strömungsrichtung nach dem Gehäuse (10) eine Umlenkeinrichtung (30) mit zumindest einer Austrittsöffnung (31) vorgesehen ist.

10. Werkstückbeschichtungsmaschine gemäß Anspruch 9, **dadurch gekennzeichnet, dass** die Austrittsöffnung (31) rund, eliptisch, quadratisch, schlitzförmig, in Gestalt einer Freiform oder - bei mehreren Austrittsöffnungen - unterschiedliche Querschnitte aufweist.

11. Werkstückbeschichtungsmaschine gemäß Anspruch 9 oder 10, **dadurch gekennzeichnet, dass** an der Umlenkeinrichtung (30) mehrere Reihen von Austrittsöffnungen (31) vorgesehen sind, die jeweils alle mit dem Gasführungspfad (22) in Verbindung stehen oder für jede Reihe der Austrittsöffnungen ein Gasführungspfad (22) vorgesehen ist.

12. Werkstückbeschichtungsmaschine gemäß Anspruch 9 oder 11, **dadurch gekennzeichnet, dass** die Umlenkeinrichtung (30) eine erste Absaugeinrichtung (41) benachbart zur Austrittsöffnung (31) aufweist.

13. Werkstückbeschichtungsmaschine gemäß Anspruch 9, **dadurch gekennzeichnet, dass** im Wesentlichen gegenüber der Austrittsöffnung (31) eine zweite Absaugeinrichtung (42) vorgesehen ist.

14. Werkstückbeschichtungsmaschine gemäß einem der Ansprüche 9-13, **dadurch gekennzeichnet, dass** die Austrittsöffnung (31) senkrecht oder geneigt aus der Umlenkeinrichtung (30) austritt.

## Claims

1. Workpiece coating machine, in particular an edge banding machine, having a hot gas generating device (1) for generating and providing hot gas, in particular hot air, for the workpiece coating machine, in particular the edge banding machine, wherein the hot gas generating device (1) has:
a housing (10), a gas conducting path (22) extending in the housing and an energy source (25) for heating a gas conducted in the gas conducting path (22),
**characterised in that** the gas conducting path (22) in the housing (10) extends about an axis (X) and the cross-section of the gas conducting path remains constant or increases in the direction of flow.

2. Workpiece coating machine according to claim 1, **characterised in that** the energy source (25) is contained within the housing.

3. Workpiece coating machine according to claim 1 or 2, **characterised in that** the gas conducting path (22) in the housing (10) runs helically or spirally about the axis (X), in particular with the same or varying pitch.

4. Workpiece coating machine according to any of claims 1-3, **characterised in that** in the housing (10) is contained a body of revolution (20) on the outside of which runs the gas conducting path (22), and the body of revolution (20) is preferably contained in an insulating pipe (60).

5. Workpiece coating machine according to any of claims 1-3, **characterised in that** in the housing (10) is contained a body of revolution (20), wherein the gas conducting path (22) extends within the body of revolution (20).

6. Workpiece coating machine according to claim 4 or 5, **characterised in that** the energy source (25) is contained in the body of revolution (20).

7. Workpiece coating machine according to any of the preceding claims, **characterised in that** the energy source (25) is a resistance heating cartridge, an IR heater or an inductive energy source.

8. Workpiece coating machine according to any of the preceding claims, **characterised in that** a plurality of housings (10) are connected in parallel or one behind the other.

9. Workpiece coating machine according to any of the preceding claims, **characterised in that** in the direction of flow behind the housing (10) is provided a deflecting device (30) having at least one outlet opening (31).

10. Workpiece coating machine according to claim 9, **characterised in that** the outlet opening (31) is round, elliptical, square, slot-like, in free form or, in the case of a plurality of outlet openings, different cross-sections.

11. Workpiece coating machine according to claim 9 or 10, **characterised in that** on the deflecting device (30) are provided a plurality of rows of outlet openings (31) which are all connected to the gas conducting path (22), or a gas conducting path (22) is provided for each row of outlet openings.

12. Workpiece coating machine according to claim 9 or 11, **characterised in that** the deflecting device (30) has a first extraction device (41) adjacent to the outlet opening (31).

13. Workpiece coating machine according to claim 9, **characterised in that** a second extraction device (42) is provided essentially opposite the outlet opening (31).

14. Workpiece coating machine according to any of claims 9-13, **characterised in that** the outlet opening (31) emerges from the deflecting device (30) perpendicularly or at an angle.

## Revendications

1. Machine de revêtement de pièces, en particulier encolleuse de chants, avec un dispositif générateur de gaz chaud (1) destiné à produire et fournir du gaz chaud, en particulier de l'air chaud, pour la machine de revêtement de pièces, en particulier pour l'encolleuse de chants,
dans laquelle le dispositif générateur de gaz chaud (1) comporte :
un boîtier (10), un chemin de guidage de gaz (22) passant dans le boîtier ainsi qu'une source d'énergie (25) destinée à chauffer un gaz passant dans le chemin de guidage de gaz (22),
**caractérisée en ce que** le chemin de guidage de gaz (22) s'étend dans le boîtier (10) autour d'un axe (X) et la section transversale du chemin de guidage de gaz reste constante ou augmente dans le sens d'écoulement.

2. Machine de revêtement de pièces selon la revendication 1, **caractérisée en ce que** la source d'énergie (25) est logée à l'intérieur du boîtier.

3. Machine de revêtement de pièces selon la revendication 1 ou 2, **caractérisée en ce que** le chemin de guidage de gaz (22) s'étend dans le boîtier (10) sous la forme d'une torsade, d'une hélice ou d'une spirale autour de l'axe (X), en particulier avec un pas identique ou variable.

4. Machine de revêtement de pièces selon l'une quelconque des revendications 1 à 3, **caractérisée en ce qu'**un corps de révolution (20) est logé dans le boîtier (10), **en ce que** le chemin de guidage de gaz (22) s'étend sur le côté extérieur de celui-ci et **en ce que** le corps de révolution (20) est logé de préférence dans un tube isolant (60).

5. Machine de revêtement de pièces selon l'une quelconque des revendications 1 à 3, **caractérisée en ce qu'**un corps de révolution (20) est logé dans le boîtier (10), le chemin de guidage de gaz (22) passant à l'intérieur du corps de révolution (20).

6. Machine de revêtement de pièces selon la revendication 4 ou 5, **caractérisée en ce que** la source d'énergie (25) est logée dans le corps de révolution (20).

7. Machine de revêtement de pièces selon l'une quelconque des revendications précédentes, **caractérisée en ce que** la source d'énergie (25) est une cartouche de chauffage à résistance, une lampe infrarouge ou une source d'énergie à induction.

8. Machine de revêtement de pièces selon l'une quelconque des revendications précédentes, **caractérisée en ce que** plusieurs boîtiers (10) sont montés en parallèle ou l'une derrière l'autre.

9. Machine de revêtement de pièces selon l'une quelconque des revendications précédentes, **caractérisée en ce qu'**un dispositif de déviation (30) avec au moins un orifice de sortie (31) est prévu dans le sens d'écoulement après le boîtier (10).

10. Machine de revêtement de pièces selon la revendication 9, **caractérisée en ce que** l'orifice de sortie (31) est en forme de cercle, d'ellipse, de carré ou de fente, configurée en forme libre ou présente - dans le cas où il y a plusieurs orifices de sortie - des sections transversales différentes.

11. Machine de revêtement de pièces selon la revendication 9 ou 10, **caractérisée en ce qu'**il est prévu sur le dispositif de déviation (30) plusieurs rangées d'orifices de sortie (31) qui sont respectivement toutes en liaison avec le chemin de guidage de gaz (22) ou il est prévu un chemin de guidage de gaz (22) pour chaque rangée d'orifices de sortie.

12. Machine de revêtement de pièces selon la revendication 9 ou 11, **caractérisée en ce que** le dispositif de déviation (30) comporte un premier dispositif d'aspiration (41) au voisinage de l'orifice de sortie (31).

13. Machine de revêtement de pièces selon la revendication 9, **caractérisée en ce qu'**il est prévu un second dispositif d'aspiration (42) sensiblement en regard de l'orifice de sortie (31).

14. Machine de revêtement de pièces selon l'une quelconque des revendications 9 à 13, **caractérisée en ce que** l'orifice de sortie (31) sort perpendiculairement ou obliquement du dispositif de déviation (30).
